# EUROPEAN PATENT APPLICATION

(11) **EP 1 714 747 A1**
(43) Date of publication of application: **25.10.2006**
(21) Application number: 05709461.7
(22) Date of filing: 28.01.2005
(51) Int. Cl.: B25F 5/00, B25D 9/00, F16L 27/02

(54) **END CAP OF COMPRESSED AIR TOOL**

(30) Priority: 09.02.2004 JP 2004032665
(71) Applicant: MAX CO., LTD., Chuo-ku, Tokyo 103-8502 (JP)
(72) Inventor: YASUIKE, Minoru c/o MAX CO., LTD, Tokyo 103-8502 (JP); OGAWA, Tatsushi c/o MAX CO., LTD, Tokyo 103-8502 (JP); ADACHI, Michiaki c/o MAX CO., LTD, Tokyo 103-8502 (JP)
(74) Representative: Samson & Partner
(86) International application number: PCT/JP2005/001235
(87) International publication number: WO 2005/075152

(57) **Abstract**

A rotary joint is provided with: an end cap body having an opening formed therein; a hollow plug housing having an opening formed along the direction of the first-named opening and directed in a first axis direction; an intermediate sleeve held turnably in the plug housing on the first axis on its one end side and having an opening formed on its other end side and extending in a second axis direction inclined at a predetermined angle with respect to the first axis; and a plug portion held turnably in the intermediate sleeve on a second axis on its one end side and having a nipple portion formed on its other end side and inclined at a predetermined angle with respect to the second axis. The rotary joint is **characterized in that** its plug housing is housed/mounted in the opening of the end cap body.

## Description

### Technical Field:

This invention relates to an air-driven tool which is operated by compressed air supplied through an air hose from a compressed air supply source such as an air compressor and, more particularly, to an end cap of the air-driven tool, which has a fluid coupler for connecting one end side of an air hose having the other end connected with the compressed air supply source, to the air-driven tool.

### Background Art:

In an air-driven tool to be supplied with compressed air through an air hose from a compressed air supply source such as an air compressor, a through hole connecting an inside and an outside of a grip portion is formed in a end cap mounted on an end portion of the grip portion for gripping the tool. An air plug to be connected to a socket attached to one end of the air hose is attached to the outer side portion of the through hole, so that the air hose having one end side connected to the compressed air supply source is connected to the air plug thereby to feed the air chamber formed inside of the end cap with the compressed air for operating the tool. As the connection means for connecting the air-driven tool and the air hose, there has been known a rotary joint, in which the direction of the air plug attached to the end cap can be freely swung. In this known constitution, the direction of the tool to be operated while being connected to the air hose having its rigidity raised as the compressed air fills up can be freely operated to improve the workability.

For example, the rotary joint of the prior art disclosed in JP-A-2003-148668 is constituted such that a hollow-shaped sleeve portion having an external thread formed to be fastened on an external thread formed in the through hole of the end cap of the tool is arranged on one end side, such that a hollow-shaped plug portion having a plug formed to be mounted in a socket portion attached to the end portion of an air hose is arranged on the other end side, such that a hollow-shaped intermediate member jointing and holding the sleeve portion and the plug portion individually turnably at the two end portions is interposed between the sleeve portion and the plug portion, such that the turning axis, on which the sleeve portion of the intermediate member is turnably held, and the turning axis, on which the plug portion is turnably held, are inclined at a predetermined angle, and such that the extending direction of the plug portion is inclined at a predetermined angle with respect to the turning axis direction of the plug portion.

The rotary joint thus constituted is attached to the end capmountedontheendportionof the grip portion of the air-driven tool such as a nailing machine 1, and its plug is mounted in the socket attached to the end portion of the air hose, so that the compressed air fed to the air hose is fed through the rotary joint to the air-driven tool for the working operations. When the air-driven tool is directionally turned, the plug portion is freely swung within a predetermined angular range with respect to the tool so that the working operations can be done while the operability of the air-driven tool being unobstructed by the air hose having its rigidity raised as the compressed air fills up.

However, this rotary joint is used by fastening the sleeve portion in an internal thread formed in the end cap to be mounted on the end portion of the grip portion of the air-driven tool. The intermediate member holding the sleeve portion and the plug portion individually turnably between the two ends is interposed between the sleeve portion and the plug portion forming the air plug, so that the end portion of the plug to be mounted in the socket portion of the hose protrudes long to the back side from the end face of the back side of the end cap. In case, therefore, the tool is dropped down from the side of the air plug, a serious moment may act on the mounted portion of the rotary joint thereby to break the threadedportions. As a result, the threaded portions have to be reinforced thereby to raise the weight of and the cost for the tool. If the leading end of the air plug protrudes long to the back, on the other hand, there arises a problem that the operation to mount the air plug in the socket on the air hose side becomes hard to perform.

### Disclosure of the Invention

The present invention has been conceived to solve the problems of the prior art thus far described, and provides an end cap of air-driven tool, which can assemble a rotary joint while an air plug to be jointed to an air hose being prevented from protruding long to the back side from the end portion of the air-driven tool.

An air-driven tool of the embodiment of the invention includes an end cap, in which an air chamber is formed for reserving the compressed air, and to which the other end side of a hose connected at its one end to a compressed air supply source is removably connected, so that the air-driven tool is driven with the compressed air supplied into the air chamber through the end cap. The end cap is so mounted in the tool as to shut off the air chamber from the atmosphere and has an opening for connecting an inside and an outside of the air chamber. A rotary joint is constituted to comprise: a hollow plug housing having an opening formed along the direction of the opening and directed in a first axis direction; a hollow-shaped intermediate sleeve held turnably in the opening of the plug housing on the first axis on its one end side and having an opening formed on its other end side and extending in a second axis direction inclined at a predetermined angle with respect to the first axis; and a plug holding portion held turnably in the opening of the intermediate sleeve on a second axis on its one end side and extending on its other end side in a direction inclined at a predetermined angle with respect to the second axis. The rotary joint is characterized in that its plug housing is mounted in the opening formed in the end cap.

Moreover, an air plug, which can be removably mounted in a socket mounted on an air hose, may also be formed integrally with the plug holding portion of the plug portion constituting the rotary joint.

### Brief description of the drawings:

[Fig. 1] A longitudinal side section of a nailing machine having an end cap of Embodiment 1 mounted thereon.

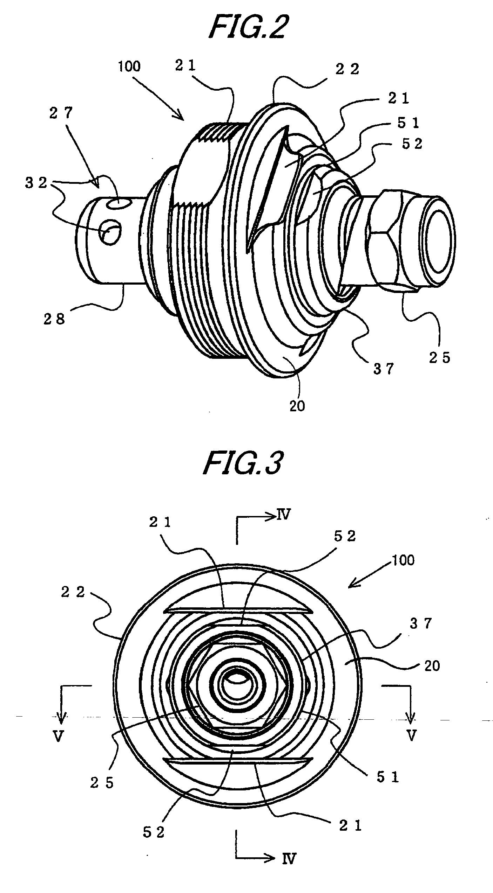

[Fig. 2] A perspective view of an end cap portion of the state, in which it is removed from the nailing machine.
[Fig. 3] A back side view of the end cap portion.

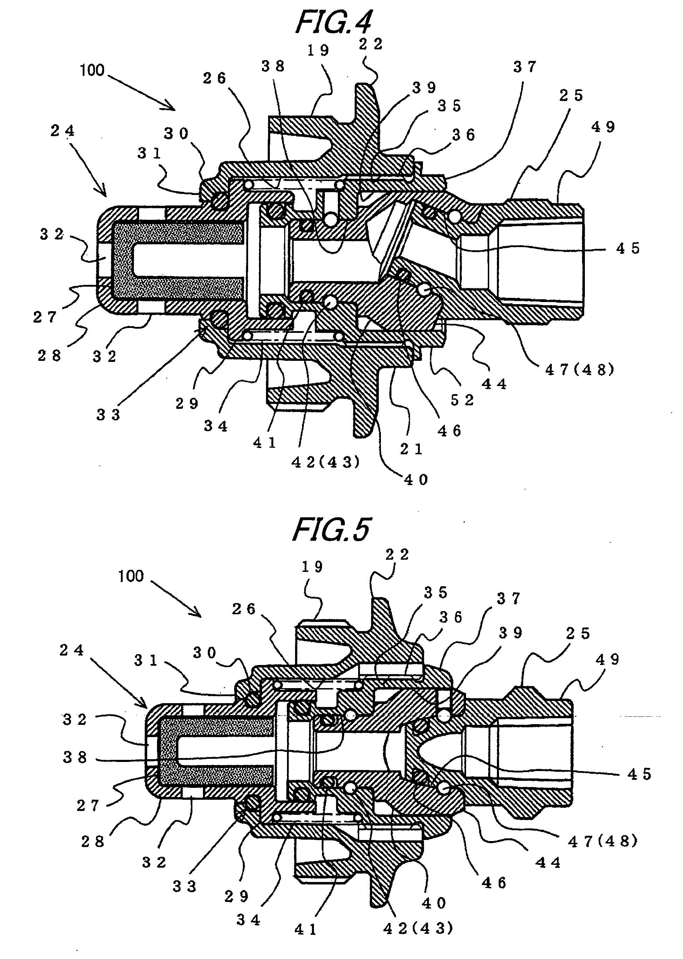

[Fig. 4] A section taken along line IV - IV of Fig. 3.
[Fig. 5] A section taken along line V - V of Fig. 3.
[Fig. 6] An exploded perspective view of members constituting the end cap portion.
[Fig. 7] A longitudinal side section of the end cap portion mounted on the nailing machine.
[Fig. 8] A longitudinal side section showing the swinging state of an air plug when a plug portion is turned with respect to an intermediate sleeve.
[Fig. 9] A longitudinal side section showing the swinging state of the air plug when an intermediate sleeve is turned with respect to a plug housing.
[Fig. 10] A longitudinal side section showing the state, in which the plug housing is removed from the end cap so as to replace a filter.
[Fig. 11] A longitudinal side section of an end cap portion of Embodiment 2.

### Description of Reference Numerals and Signs

In the reference numerals and signs of the drawings: numeral 1 designates a nailing machine (an air-driven tool); numeral 20 an end cap body; numeral 25 a plug portion; numeral 26 an opening (a first opening); numeral 37 a plug housing; numeral 38 an opening (a second opening); numeral 40 an intermediate sleeve; numeral 45 an opening (a third opening); numeral 49 a nipple portion (a plug holding portion) ; numeral 50 air plug; and numeral 100 an end cap.

### Best Mode for Carrying Out the Invention:

The embodiments of the invention will be described with reference to the accompanying drawings.

### <Embodiment 1>

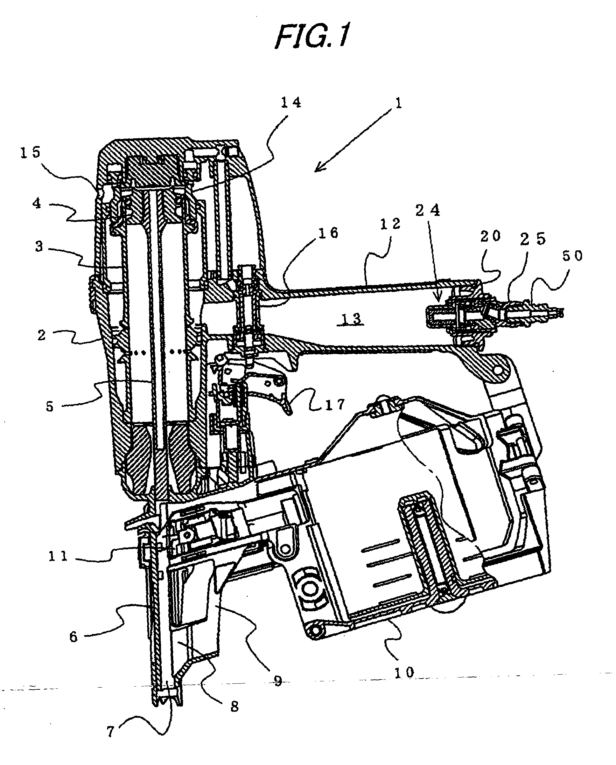

Fig. 1 shows a nailing machine 1 as one example of an air-driven tool to be driven by compressed air in accordance with an embodiment of the invention. This nailing machine 1 is equipped with a housing 2 made hollow. In this housing 2, there is housed an impacting mechanism, which is constituted to include an impact cylinder 3, an impact piston 4 slidably housed in the impact cylinder 3, and a driver 5 integrally jointed to the lower face side of the impact piston 4. To the lower portion of the housing, moreover, there is attached a nose portion 6 which has a hollow injection port 7 formed therein. The driver 5 is slidably guided in the injection port 7 formed in the nose portion 6. At the back side of the injection port 7 of the nose portion 6, there is formed an opening 8 for guiding gang nails into the injection port 7. Into one side edge of the opening 8, there merges a nail feed guide 9, on the back of which there is arranged a magazine 10 for housing the gang nails spirally wound. The gang nails housed in the magazine 10 are let off the magazine 10 so that they are sequentially fed to the injection port 7 by a nail feeding mechanism 11 arranged along the nail feed guide 9.

In the aforementioned housing 2, there is integrally formed a hollow grip portion 12, which is extended to the back side and gripped for the operations of the nailing machine 1. The grip portion 12 has its inside formed into an air chamber 13 for reserving the compressed air fed from a compressed air supply source. At the upper end of the aforementioned impact cylinder 4, there is formed a main valve 14, which connects the inside of the impact cylinder 4 selectively to between the inside of the air chamber 13 formed in the grip portion 12 and a relief port 15 vented to the atmosphere. When the main valve 14 connects the inside of the impact cylinder 4 to the air chamber 13, the compressed air in the air chamber 13 is introduced into the impact cylinder 4 thereby to drive this impact cylinder 4 downward so that the driver 5 coupled to the impact cylinder 4 impacts and drives the nail fed into the injection port 7. At the root portion of the grip portion 12, there is arranged a trigger valve 16 for controlling the main valve 14. The trigger valve 16 is activated by a trigger lever 17, which can be operated by the finger of a hand gripping the grip portion 12, to activate the main valve 14 so that the impact cylinder 4 may connect the air chamber 13 and the relief port 15 selectively.

In the inner circumference of the opened rear end portion of the grip portion 12 made hollow, there is formed an internal thread 18, which is fastened by an external thread portion 19 formed in the outer circumference of an end cap body 20, so that the end cap body 20 is mounted on the end face of the grip portion 12. An O-ring 23 is mounted on the root portion of a flange portion 22 formed to bulge radially outward from the outer circumference of the end cap body 20. This O-ring 23 is clamped between the end portions of the flange portion 22 and the grip portion 12, so that the air chamber 13 for reserving the compressed air fed from the compressed air supply source is formed in the grip portion 12. On the end cap body 20, there is formed a width across flats 21 for engaging with a tool such as a spanner to turn the end cap body 20 when the end cap body 20 is fastened. On the side of the inside of the air chamber 13 of an end cap 100, there is formed a dustproof filter device 24 for trapping a foreign substance such as dust in the compressed air to be fed to the inside of the air chamber 13. On the back side of the end cap 100, moreover, there is formed a plug portion 25, which is connected to the air hose for feeding the compressed air into the air chamber 13.

In the end cap body 20, there is formed a sleeve-shaped opening 26 (a first opening 26), which is longitudinally directed to extend the inside and outside of the air chamber 13. The dustproof filter device 24 is formed on the front end side of the opening 26, i.e., in the end portion on the side of the air chamber 13. The dustproof filter device 24 is constituted of a cylindrical filter case 28 having its one end side opened. In this filter case 28, there is housed a dustproof filter 27 for filtering the compressed air to be fed into the air chamber 13 thereby to trap solid components such as sand or dust. An O-ring 30 is mounted on the root portion of an outward flange portion 29 formed on the outer circumference of the filter case 28. The O-ring 30 is closely fitted on an inward flange portion 31 formed at the end portion of the opening 26 of the end cap body 20 so that the filter case 28 is mounted on the opening 26 thereby to seal the inside of the air chamber 13 and the atmosphere. A plurality of air inlets 32 are so formed in the end face of the other end side of the filter case 28 formed into a cylinder shape having one end side opened and in the cylinder wall face, as to provide communications between the inside and the outside of the filter case 28. When the compressed air fed to one end side of the filter case 28 is fed through the air inlets 32 into the air chamber 13, it is cleared, when it passes through the dustproof filter 27 arranged in the filter case 28, of the sand, dust or the like by the dustproof filter 27 thereby to prevent those foreign substances from being fed into the air chamber 13.

Moreover, the filter case 28 forms a relief valve mechanism 33, which acts to release the compressed air or the like of a higher pressure than that in the air chamber 13 when the pressure of the compressed air or the like fed into the air chamber 13 exceeds the ordinary pressure for driving the nailing machine 1. The filter case 28 acts as the valve member 28 of the relief valve mechanism 33. The filter case 28 (the valve member 28) is arranged to slide in the sleeve-shaped opening 2 6 formed in the end cap body 20 and to cause the compressed air fed into the air chamber 13 to act on the filter case 28 (the valve member 28) thereby to push the filter case 28 (the valve member 28) backward, i.e., in the direction to bring the O-ring 30 apart from the inward flange portion 31. Moreover, the filter case 28 (the valve member 28) is biased to the front side by the elasticity of a spring 34. At an ordinary time, the O-ring 30, which is mounted on the outer circumference of the filter case 28 (the valve member 28), is closely fitted on the inward flange portion 31 of the opening 26 to arrange the filter case 28 (the valve member 28) at the position to block the communication between the inside of the air chamber 13 and the atmosphere. Moreover, the pressure in the air chamber 13 acts, when it exceeds the ordinary pressure range to be applied to the nailing machine 1, upon the filter case 28 (the valve member 28) to move the filter case 28 (the valve member 28) to the back side against the biasing force of the spring 34 so that the O-ring 30 is moved apart from the inward flange portion 31 to vent the inside of the air chamber 13 to the atmosphere thereby to release the compressed air under the high pressure in the air chamber 13 to the atmosphere.

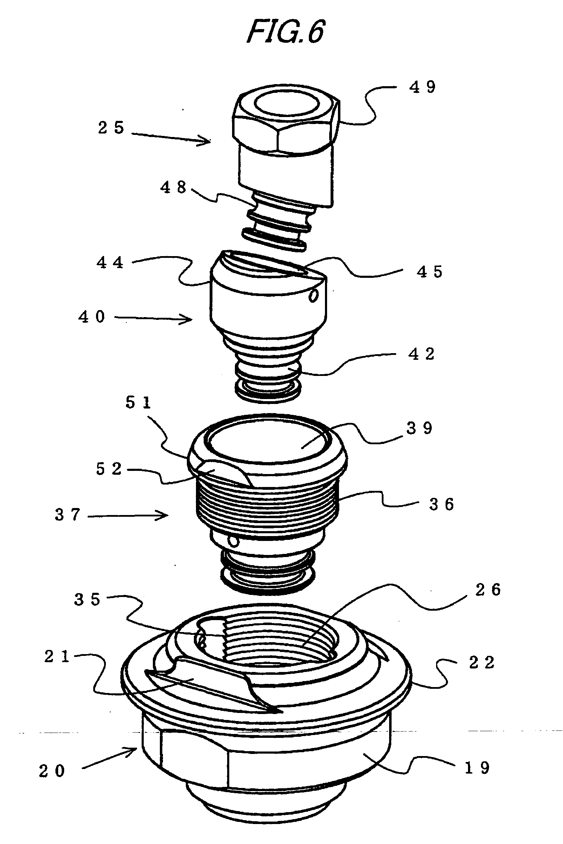

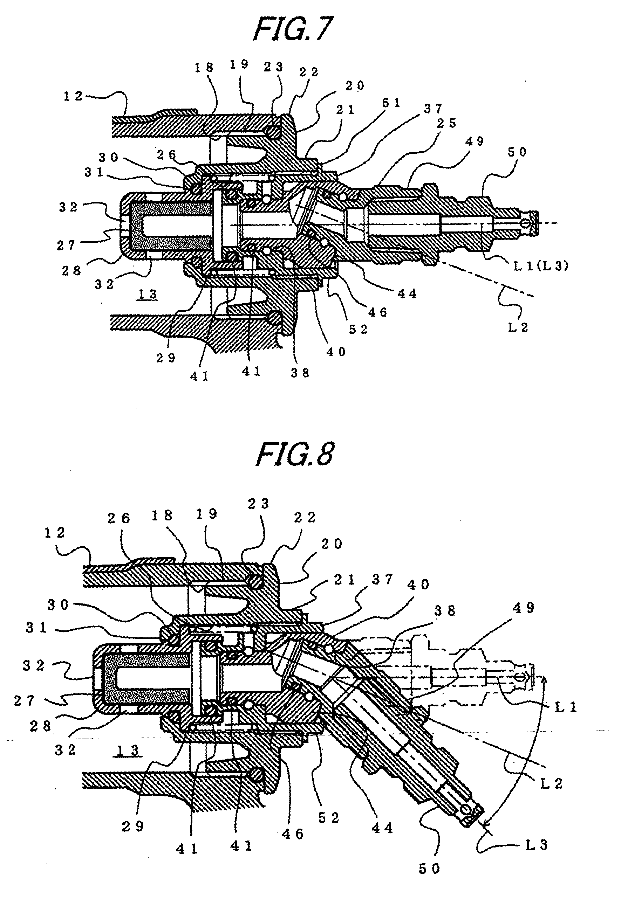

As shown in Fig. 6 and Fig. 7, an internal thread 35 is formed in the inner circumference at the front end of the opening 26 which is formed in the end cap body 20. On the internal thread 35 of the end cap body 20, there is fastened a plug housing 37, which has an external thread 36 formed on the outer circumference. In short, the plug housing 37 is housed/mounted in the end cap body 20. On the front side of the plug housing 37 made hollow, there is formed a cylindrical opening 38 (a second opening 38), which is formed on a first axis L1 extending in the same direction as that of the opening 26 formed in the end cap body 20. On the back side, on the other hand, there is formed a recess 39, which has a larger diameter than that of the opening 38. In this opening 38, there is so fitted one end side of an intermediate sleeve 40 made hollow as is turnably held on the first axis L1. The one end side of the intermediate sleeve 40 is housed in the opening 38 of the plug housing 37, and an O-ring 41 mounted on the outer circumference of the intermediate sleeve 40 is fittedon the inner circumference of the opening 38 of the plug housing 37, thereby to provide communication between the insides of the plug housing 37 and the intermediate sleeve 40. Steel balls are housed in annular grooves 42 and 43 which are formed in the inner circumference of the opening 38 of the plug housing 37 and in the outer circumference of the intermediate sleeve 40, thereby to hold the intermediate sleeve 40 freely turnable with respect to the plug housing 37.

On the back side of the intermediate sleeve 40, there is formed a boss portion 44 which has a larger external diameter than that of the one end side fitted in the opening 38. This boss portion 44 is arranged in the recess 39 of a large internal diameter, which is formed on the back side of the plug housing 37. In the boss portion 44 of the intermediate sleeve 40, there is formed a cylindrical opening (a third opening 45), which extends in the direction of a second axis L2 inclined at a predetermined angle with respect to the aforementioned first axis L1. The plug portion 25 is fitted on its one end side in that opening 45 so that it is turnably held on the second axis L2. An O-ring 46 mounted on the outer circumference on one end side of the plug portion 25 is fitted on the inner circumference of the opening 45 of the intermediate sleeve 40 thereby to provide communication between the insides of the intermediate sleeve 40 and the plug portion 25. Steel balls are housed in annular grooves 42 and 43 which are formed in the inner circumference of the opening 45 of the intermediate sleeve 40 and in the outer circumference of the plug portion 25, thereby to hold the plug portion 25 freely turnable with respect to the intermediate sleeve 40.

In the state where the end cap body 20 is mounted on the end portion of the grip portion 12 of the nailing machine 1, as shown in Fig. 7, a nipple portion 49 (a plug holding portion 49) extending in the direction of a third axis L3 inclined at a predetermined angle with respect to the second axis L2 is formed at the end portion of the plug portion 25 which is arranged to protrude to the back side of the grip portion 12 of the nailing machine 1. To this nipple portion 49, there is attached to an air plug 50 or the like, which is removably mounted on a socket mounted on the end portion of the air hose. Thus, the plug portion 25 having the nipple portion 49 formed with the inclination of the predetermined angle is so attached to the plug housing 37 through the intermediate member 38 turnably held on the first axis L1 extending to the back side of the grip portion 12 as can freely turn on the second axis L2 inclined with respect to the first axis L1, thereby to constitute a rotary joint allowing the air plug 50 attached to the nipple portion 49 to swing in the direction of an arbitrary angle within a predetermined angular range.

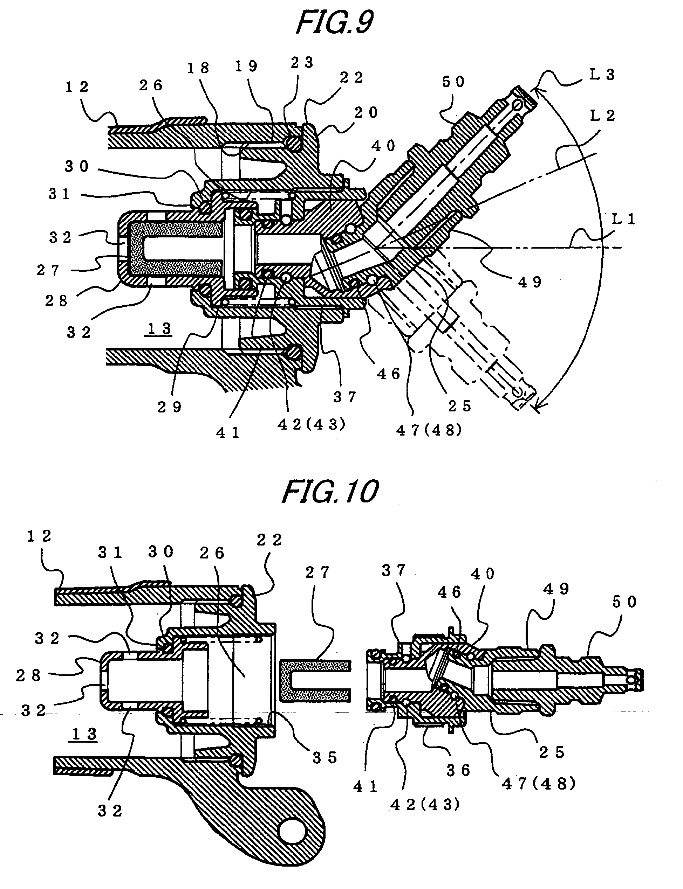

The plug portion 25 having the air plug 50 attached to the nipple portion 49 is turned on the second axis L2 in the opening 45 of the intermediate sleeve 40 holding the plug portion 25 so that the air plug 50 can be swung on the second axis L2 within the angle made by the nipple portion 49, as shown in Fig. 8. As shown in Fig. 9, the intermediate sleeve 40 supporting the plug portion 25 is turned on the first axis L1 with respect to the plug housing 37 so that the air plug 50 can be swung to a free position on the first axis within the range of the angle of the sum of the angle made by the second axis L2 with respect to the first axis and the angle made by the third axis L3 of the extension of the nipple portion 49 with respect to the second axis L2. In this embodiment, both the angle made between the first axis L1 and the second axis L2 and the angle made between the second axis L2 and the third axis L3 are set to about 22.5 degrees so that the air plug 50 can rotationally be swung on the first axis L1 within the angular range of 90 degrees. Thus, the air plug 50 can swing in a free direction within the predetermined angular range so that the operating direction of the nailing machine 1 to be connected in use to the compressed air supply source through the air hose can be freed to improve the workability of the nailing work.

A flange portion 51 is formed at the outer circumference near the rear end portion of the plug housing 37, so that only the portion on the back side of the flange portion 51 is exposed to the back side of the end cap body 20 whereas the remaining portion is wholly arranged in the sleeve-shaped opening 26 formed in the end cap body 20. On the outer circumferential of the plug housing 37 on the back side of the flange portion 51, there is formed a width across flats 52, which is engaged with the tool such as the spanner to turn the plug housing 37 when the plug housing 37 is mounted on or removed from the end cap body 20. When the plug housing 37 is removed from the end cap body 20, as shown in Fig. 10, the dustproof filter 27 housed in the filter case 28 can be replaced. Moreover, the intermediate sleeve 40, which is turnably held in the plug housing 37, is almost housed and arranged in the opening 38 and the recess of the plug housing 37. Moreover, what is protruded to the back side of the end cap body 20 is the nipple portion 49 for mounting the air plug of the plug portion 25, so that the entire length of the rotary joint thus constituted can be reduced to improve the operability of the air-driven tool.

### <Embodiment 2>

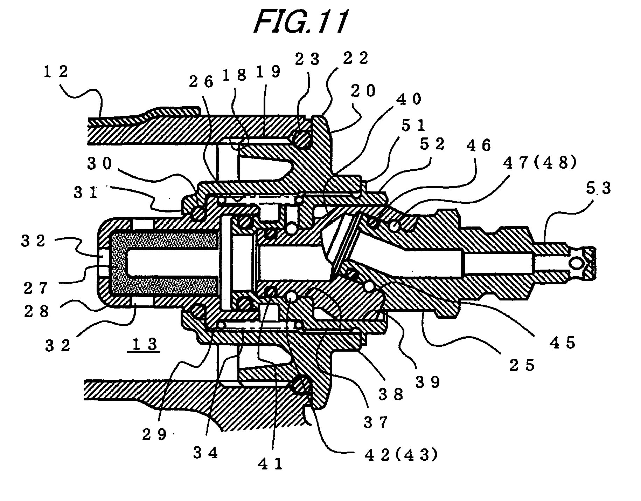

The foregoing embodiment has been described on the constitution, in which the internally threaded nipple portion 49 for mounting the air plug 50 is formed in the plug portion 25. With the other end portion of the plug portion 25 which has its one end side turnably held in the socket mounted on the end portion of the air hose, as shown in Fig. 11, there may also be integrally formed an air plug 53, which can be removably mounted in the socket mounted on the end portion of the air hose. By thus forming the air plug 53 integrally with the plug portion 53, the backward protrusion of the air plug 53 can be made shorter to improve the operability better.

In the embodiments thus far described, the end cap 100 is equipped with the rotary joint mechanism, the dustproof filter device 24 and the relief valve mechanism 33, the latter two of which may be omitted in case their functions are not necessary.

The present invention has been described in detail with reference to the specific modes of embodiments. However, it is apparent to those skilled in the art that the invention can be modified or corrected in various manners without departing from the spirit and scope of the invention.

The present application is based on Japanese Patent Application (No. P2004-03265) filed on February 9, 2004, the contents of which are incorporated herein as a reference.

### Industrial Applicability:

At the end cap so mounted on the tool as to shut the air chamber off the atmosphere, according to the invention, the rotary joint is constituted to include: the hollow plug housing having the opening for providing communication between the inside and outside of the air chamber; the hollow intermediate sleeve held turnably on the first axis by the plug housing and having the opening formed therein and extending in the second axis direction inclined at the predetermined angle with respect to the first axis; and the plug portion held turnably on the second axis in the opening of the intermediate sleeve and having the plug holding portion formed on its one side and extending in the direction inclined at the predetermined angle with respect to the second axis. The plug housing of the rotary joint thus constituted is mounted in the opening formed in the end cap. As a result, while the air plug is attached to the plug holding portion, the air plug arranged to protrude to the back side from the end face of the end cap mounted on the tool does not have a protrusion size enlarged. Even in case the tool is dropped down from the plug side to the floor or the like, no high moment is applied to the root portion of the plug so that the size and weight can be reduced while preventing the breakage.

In case, moreover, the air plug capable of being removably mounted in the socket attached to the air hose is formed integrally with the plug holding portion of the plug portion, the protrusion size of the air plug to the back side can be more reduced to reduce the size and weight of the air-driven tool more.

## Claims

1. An end cap of air-driven tool, which is attached to an air-driven tool having an air chamber for reserving compressed air and driven by the compressed air fed from a compressed air supply source, and to which a hose connected to the compressed air supply source is removably jointed, the end cap of air-driven tool comprising:
an end cap body attached to the air-driven tool to shut off the air chamber from atmosphere and having a first opening for providing communication between an inside and an outside of the air chamber;
a plug housing housed and mounted in the first opening and having a second opening directed in a first axis direction along a direction of the first opening;
an intermediate sleeve having one end held in the second opening and turnable on the first axis and the other end formed with a third opening extending in a second axis direction inclined at a predetermined angle with respect to the first axis; and
a plug portion having one end held in the third opening and turnable on the second axis and the other end extending in a direction inclined at a predetermined angle with respect to the second axis.

2. The end cap of air-driven tool according to claim 1, further comprising an air plug portion formed integrally with the plug portion and capable of being connected to a socket on the air hose for supplying the compressed air from the compressed air supply source.

3. The end cap of air-driven tool according to claim 1, further comprising a relief valve mechanism including a valve member arranged in the end cap body and slidable along the first axis, and a spring for biasing the valve member toward the side of the air chamber,
when the pressure in the air chamber exceeds an ordinary pressure range for driving the air-driven tool, the valve member moves in a direction opposite to the air chamber against the biasing force of the spring, and the relief valve mechanism releases the compressed air in the air chamber to the atmosphere.

4. The end cap of air-driven tool according to claim 3,
wherein the valve member includes a filter case, and
the filter case includes a dustproof filter housed therein for preventing foreign substances from being fed to an inside of the air chamber.
